# EUROPÄISCHE PATENTSCHRIFT

(11) **EP 0 928 444 B1**
(45) Veröffentlichungstag und Bekanntmachung des Hinweises auf die Patenterteilung: **19.11.2003**
(21) Anmeldenummer: 97941727.6
(22) Anmeldetag: 24.09.1997
(51) Int. Cl.: G06F 1/00

(54) **VORRICHTUNG ZUM SCHUTZ EINES ELEKTRONISCHEN GERÄTS**
DEVICE FOR PROTECTING AN ELECTRONIC APPARATUS
DISPOSITIF POUR PROTEGER UN APPAREIL ELECTRONIQUE

(30) Priorität: 24.09.1996 AT 169496
(43) Veröffentlichungstag der Anmeldung: 14.07.1999
(73) Patentinhaber: Ericsson Enterprise GmbH, 1121 Wien (AT)
(72) Erfinder: JAEGTNES, Leif, Ingemar, A-1130 Wien (AT); ZIMMERMANN, Gerhard, A-1100 Wien (AT)
(74) Vertreter: Gibler, Ferdinand, Dipl.Ing. Dr. techn.
(86) Internationale Anmeldenummer: AT9700207
(87) Internationale Veröffentlichungsnummer: WO98013741

(56) Entgegenhaltungen:
- WO-A-86/05898
- WO-A-88/05941
- FR-A- 2 667 173
- US-A- 5 182 770

## Beschreibung

Die Erfindung betrifft eine Vorrichtung zum Schutz eines elektronischen Geräts, einer Anlage, eines Systems od. dgl. gegen die Benutzung von über sperrbare Programme oder Programmteile ausführbaren Funktionen, welche Vorrichtung mit dem zu schützenden Gerät, Anlage, System od. dgl. über eine Schnittstelle verbindbar ist, wobei der Schutzvorrichtung eine vorbestimmbare Identifikationsnummer zugeordnet ist und die Schutzvorrichtung einen vorzugsweise nichtlöschbaren Speicher, z.B. ein EEPROM, zur Speicherung zumindest eines Aktivierungskodes umfaßt, welcher Aktivierungskode mit der Identifikationsnummer vergleichbar ist, und ein auslese gesicherter Programmspeicher zur Speicherung zumindest eines Freigabeprogramms vorgesehen ist, welches Freigabeprogramm bei Übereinstimmung des Aktivierungskodes und der Identifikationsnummer der Schutzvorrichtung durchgeführt wird.

Vorrichtungen dieser Art, welche auch dongle, security device, hardlock usw. genannt werden, dienen dem Schutz von einzelnen Funktionen einer Computer-Softwaxe, die von Programmen oder Programmteilen ausgeführt werden. Der bisher bekanntgewordene Software-Schutz beruht auf Software- oder Hardware-Lösungen bzw. einer Kombination aus diesen.

Reine Softwarelösungen sind typisch für professionelle Computersysteme, welche mit einer individuellen, weltweit nur einmal auftretenden Identifikationsnummer, der Node-ID, ausgestattet sind. Das geschützte Programm läuft nur dann, wenn zu einem Abfragekode ein passender Antwortkode im System abgelegt worden ist. Vor der Ausführung des geschützten Programms oder Programmteils errechnet die Anlagen-Software aus der Maschinenidentifikationsnummer einen Schlüsselwert, der mit einem zweiten aus dem Antwortkode errechneten Schlüsselwert verglichen wird. Wenn diese zueinander passen, wird der Programmablauf fortgesetzt. Es kann aber sogar auch ein Teil des Programmkodes verschlüsselt sein, der erst mit einem Schlüssel gebildet aus Antwortkode und Seriennummer dekodiert werden muß.

Die Vorteile einer solchen Software-Lösung liegen in ihrer Wartungsfreundlichkeit, da die Antwortkodespeicherung im System sehr rasch automatisch, beispielsweise über Modem, oder manuell per Tastatur erfolgen kann, beispielsweise indem der Kode per Telephon, per Fax oder mündlich an eine Bedienungsperson weitergegeben wird, welche ihn dann eingibt. Weiters ist es vorteilhaft, daß für verschiedene Programmfunktionen auch verschiedene Kodes möglich sind. Es entstehen keine zusätzlichen Kosten für jedes geschützte Programm und es ergibt sich eine relativ hohe Sicherheit.

Die Nachteile einer solchen Software-Lösung bestehen darin, daß ein Wechsel auf ein anderes System mit einer anderen Identifikationsnummer vom Lizenznehmer nicht durchführbar ist. Weiters benötigt das zu schützende System eine unverwechselbare Identifikationsnummer, welche aber nicht immer vorhanden ist, wodurch der Schutz unsicher wird.

Als zweiter großer Bereich bekannter Realisierungen von Softwareschutz sind Hardwarelösungen anzusehen, die typisch im PC-Bereich eingesetzt werden. Eine mit einer Computerschnittstelle zu verbindende Vorrichtung ("Dongle") antwortet auf Fragecodes der Software mit passenden Antwortkodes. Anstelle von einfachen Antwortkodes kann ein kodierter Teil des Programms von diesem Dongle entschlüsselt oder Berechnungen von Programmalgorithmen in den Dongle übertragen werden. Die Vorteile der Hardware-Lösungen bestehen darin, daß der Schutz in Form des Dongles von System zu System transferiert werden kann, was bei einem Systemtausch im Falle eines Defekts oder einer Generationenanpassung von großer Bedeutung ist. Es ist keine Identifikationsnummer innerhalb des Systems notwendig.

Ein Nachteil der Hardware-Lösungen liegt aber darin, daß normalerweise nur Schutz für ein Programm oder einen Programmteil jeweils für einen Dongle zu erlangen ist. Einzelne Programmteile können nicht oder nur mit sehr großem Aufwand neu lizenziert werden. Weiters benötigt dieser eine eigene Schnittstelle und bezieht auch die Stromversorgung aus dieser.

Die US-PS-5 222 133 offenbart eine Schutzvorrichtung, bei der für jedes freizuschaltende Programmteil ein Antwortkode in einen Festspeicher eines zu schützenden Systems eingespeichert wird, von wo dieser bei richtigem Aktivierungskode abgerufen werden kann.

Die Aufgabe der Erfindung besteht darin, eine Vorrichtung der eingangs genannten Art anzugeben, die einen sicheren Schutz gegen die unautorisierte Inbetriebnahme von mehreren gesperrten Funktionen bietet, ohne ausschließlich dafür benötigte Bauteile in dem zu schützenden Gerät vorsehen zu müssen.

Weitere Aufgabe der Erfindung ist es, auch eine Änderung der freizugebenden Funktionen zu ermöglichen, die ohne die zu schützende Anlage oder die Schutzvorrichtung an den Lizenzgeber zurückgeben zu müssen, auch über sehr weite Entfernungen durchgeführt werden kann.

Erfindungsgemäß wird dies dadurch erreicht, daß der auslesegesicherte Programmspeicher zur Speicherung zumindest eines Freigabeprogramms zusammen mit dem Speicher zur Speicherung zumindest eines Aktivierungskodes in der Schutzvorrichtung angeordnet ist.

Somit ist nicht nur die Identifikationsnummer in der erfindungsgemäßen Schutzvorrichtung enthalten, sondern es ist in dieser auch der Speicher für die Freigabeprogramme für einzelne Funktionen des zu schützenden Geräts enthalten.

Dadurch ist ein Schutz gegen eine unerlaubte Freigabe von Programmen oder Programmteilen möglich, ohne daß bei einem Austausch des zu schützenden Geräts oder Anlage der Aktivierungskode neu berechnet werden muß. Aufgrund der Anordnung des Programmspeichers in der Schutzvorrichtung wird kein solcher in der zu schützenden Anlage benötigt. Es können unterschiedliche Schutzmechanismen für die einzelnen Programme oder Programmteile gewählt werden, solange die entsprechenden Algorithmen in den Programmspeicher der erfindungsgemäßen Schutzvorrichtung passen. Diese können dann einzeln ein- und ausgeschaltet werden. Sollte das zu schützende Gerät defekt werden, kann jederzeit ein Ersatzsystem mit der erfindungsgemäßen Schutzvorrichtung weiterarbeiten. Die erfindungsgemäße Schutzvorrichtung kann beim Systemhersteller oder Softwarelieferanten bereits für die Wünsche des Benutzers vorkonfiguriert werden.

Gemäß einer anderen Variante der Erfindung kann vorgesehen sein, daß im auslesegesicherten Programmspeicher eine Vielzahl von Freigabeprogrammen und im Aktivierungskodespeicher den Freigabeprogrammen zugeordnete Aktivierungskodes gespeichert sind, welche Freigabeprogramme voneinander getrennt abrufbar sind.

Dadurch können Schutzmechanismen für mehrere Programme oder Programmteile in unterschiedlicher Form unabhängig voneinander gewählt werden.

Nach einem weiteren Merkmal der Erfindung kann der auslesegesicherte Programmspeicher zusammen mit einem Mikroprozessor in der Schutzvorrichtung angeordnet sein.

Dadurch können alle Kommunikations- bzw. Umschlüsselungs- und Vergleichsvorgänge auf einfache Weise zentral verarbeitet werden.

In weiterer Ausbildung der Erfindung kann vorgesehen sein, daß zumindest ein Teil der Freigabeprogramme über eine vom zu schützenden Gerät getrennte Eingabevorrichtung aktivierbar sind, mit der die Schutzvorrichtung verbindbar ist.

Sollte am zu schützenden Gerät kein Eingabesystem zum Aktivieren von weiteren Freigabeprogrammen vorhanden sein, können dadurch die Aktivierungskodes der erfindungsgemäßen Schutzvorrichtung auf dieser getrennten Eingabevorrichtung entsprechend verändert werden.

Gemäß einer anderen Variante der Erfindung kann vorgesehen sein, daß die Schutzvorrichtung über einen Steckkontakt mit dem zu schützenden Gerät, Anlage, System od. dgl. verbindbar ist.

Dadurch ist die durch die Schutzvorrichtung erlangte Autorisierung zum Betreiben eines besonderen Programms auch für andere Geräte, Anlagen, etwa für eine Anlage einer neuen Generation, mit einer solchen Steckverbindung einsetzbar.

In weiterer Ausbildung der Erfindung kann vorgesehen sein, daß die Stromversorgung der Schutzvorrichtung aus der parallelen Schnittstelle erfolgt.

Dadurch kann die Schutzvorrichtung ohne eigene Versorgungseinrichtung betrieben werden.

Eine weitere Aufgabe der Erfindung kann darin bestehen, ein Verfahren zur Freigabe eines gesperrten Programms oder Programmteils unter Verwendung einer erfindungsgemäßen Schutzvorrichtung anzugeben.

Dies kann dadurch erreicht werden, daß in einem ersten Schritt von dem Gerät, der Anlage, dem System od. dgl. aus eine Abfrage nach einem Programm oder Programmteil für eine geschützte Funktion an die Schutzvorrichtung durchgeführt wird, daß in einem zweiten Schritt eine der im Programmspeicher abgelegten Freigabeprogramme ermittelt wird, mit welcher die Abfrage beantwortbar ist, daß in einem dritten Schritt der zugehörige Aktivierungskode aus dem Speicher ausgelesen und entschlüsselt, sowie das daraus gewonnene Ergebnis mit der Identifikationsnummer der Schutzvorrichtung verglichen wird, daß in einem vierten Schritt bei Übereinstimmung von Identifikationsnummer und dem entschlüsselten Aktivierungskode das ermittelte Freigabeprogramm das gesperrte Programm oder Programmteil im Gerät freigibt, oder bei Nichtübereinstimmung von Identifikationsnummer und dem entschlüsselten Aktivierungskode das Programm oder Programmteil der Abfrage gesperrt bleibt.

Auf diese Weise können verschiedene Programme oder Programmteile unabhängig voneinander im zu schützenden Gerät von ihrer Sperre befreit werden, es erfolgt dabei aber keine Speicherung von Daten in dem zu schützenden Gerät, sondern es sind alle die Schutzmaßnahmen betreffenden Teile in der Schutzvorrichtung konzentriert.

In weiterer Ausbildung der Erfindung kann vorgesehen sein, daß im vierten Schritt bei Nichtübereinstimmung von Identifikationsnummer und dem entschlüsselten Aktivierungskode das der Abfrage entsprechende Programm oder Programmteil mit nur eingeschränkter Funktionalität oder zeitlich begrenzt bleibt und ein anderes Programm freigegeben wird.

Dadurch wird ein Ausprobieren von Aktivierungskodes durch unbefugte Personen unterbunden, da das andere freigegebene Programm zunächst vortäuschen kann, daß ein Aktivierungskode richtig dechiffriert worden ist. Durch den dabei sich ergebenden Zeitverlust bei der Suche nach dem richtigen Aktivierungskode wird das nicht erwünschte Ausprobieren eines Aktivierungskodes unter gewöhnlichen Umständen unmöglich gemacht.

Gemäß einem anderen Merkmal der Erfindung kann vorgesehen sein, daß im vierten Schritt bei Nichtübereinstimmung von Identifikationsnummer und dem entschlüsselten Aktivierungskode ein Signal-Freigabeprogramm gestartet wird, welches eine Signalisierung auslöst.

Dadurch kann ein unbefugtes oder auch irrtümliches falsches Eingeben eines Aktivierungskodes in geeigneter Weise gemeldet werden, etwa indem der Vorgang über ein Modem berichtet oder in einem Speicherbaustein mit Datum und Uhrzeit abgelegt wird.

Schließlich kann vorgesehen sein, daß im dritten Schritt der zugehörige Aktivierungskode aus dem Aktivierungskodespeicher gelesen und mit der Identifikationsnummer mathematisch verknüpft wird, wodurch ein funktioneller Teil des Freigabeprogramms, z.B eine Berechnungskonstante oder ein Programmcode, gebildet wird.

Dadurch entfällt der vierte Schritt, da das Freigabeprogramm bei falschem Aktivierungskode automatisch falsche Ergebnisse liefert.

Nachstehend wird die Erfindung anhand der in den Zeichnungen dargestellten Ausführungsbeispiele eingehend erläutert. Es zeigt dabei:
Fig.1 eine schematische Darstellung der Organisation des Programmspeichers und des Aktivierungskodespeichers einer erfindungsgemäßen Schutzvorrichtung und
Fig.2 ein Blockschaltbild mit einer Ausführungsform einer erfindungsgemäßen Schutzvorrichtung.

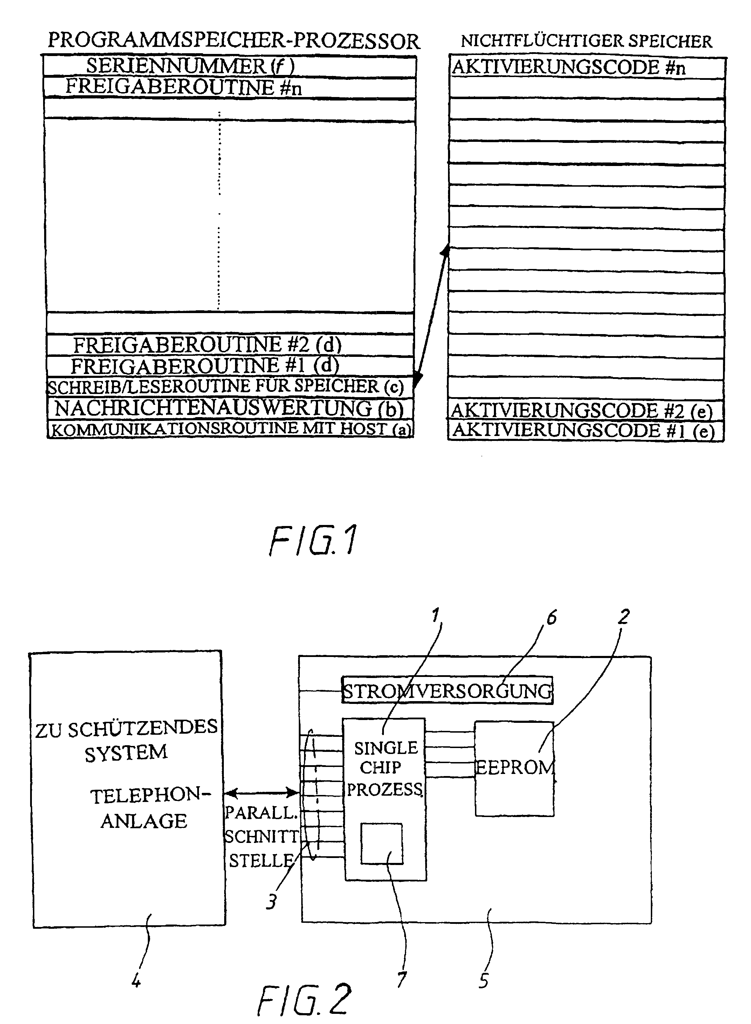

In Fig.2 ist eine Vorrichtung 5 zum Schutz einer Telephonnebenstellenanlage 4 gegen die Benutzung von bestimmten über Programme oder Programmteil ausführbaren Funktionen gezeigt. Diese Funktionen sind bereits bei der Herstellung in der Telephonanlage vorgesehen worden aber bei der Auslieferung an den Betreiber zunächst gesperrt. So kann eine solche Funktion darin bestehen, daß etwa einlangende Gespräche an beliebige gerade freie Nebenstellenapparate verbunden werden. Die zum Verkauf angebotenen Anlagen enthalten nun alle diese Funktion, sie wird aber nur gegen eine Aufzahlung bereitgestellt. Wünscht der Betreiber nun eine solche Zusatzfunktion, so kann er diese beispielsweise durch Bezahlung einer Lizenzgebühr erlangen, worauf der Hersteller der Anlage oder ein autorisierter Händler durch das Abspeichem eines passenden Aktivierungskodes die Freigabe des gesperrten Programmes oder Programmteiles bewirkt. Es soll dadurch erreicht werden, daß Anlagen bereits vollständig mit allen zusätzlichen Funktionen ausgerüstet werden können, es aber nur einem bestimmten Kreis von Personen möglich ist, die Freigabe derselben durchzuführen. Dies kann im Rahmen der Erfindung für alle möglichen elektronischen Geräte, Anlagen, Systeme, welche mit Programmteilen oder Programmen arbeiten, verwirklicht sein.

Die Aktivierungskodes können dabei per Modem oder auch über Tastatureingabe in die zu schützende Anlage 4 eingegeben und dann an die Schutzvorrichtung 5 weitergegeben werden, welche mit der Anlage 4 über eine Schnittstelle 3, vorzugsweise mittels eines nicht dargestellten Steckkontakts, verbindbar ist. Steckbare Schutzvorrichtungen werden im Fachjargon üblicherweise als "dongels" bezeichnet. Über die Schutzvorrichtung 5 sind bestimmte Programmfunktionen der Anlage 4 freigebbar oder sperrbar.

Die Schutzvorrichtung 5 umfaßt einen nichtlöschbaren Speicher, z.B. ein EEPROM, zur Speicherung von Aktivierungscodes, welche Aktivierungscodes aufrufbar und mit einer vorbestimmbaren Identifikationsnummer vergleichbar sind, welche in der Schutzvorrichtung 5 auslesegesichert abgelegt ist. Weiter ist ein auslesegesicherter Programmspeicher 7 zur Speicherung von Freigabeprogrammen vorgesehen, wobei ein bestimmtes Freigabeprogramm dann abgearbeitet wird, wenn Übereinstimmung des entschlüsselten Aktivierungskodes mit der Identifikationsnummer vorliegt.

Unter Freigabeprogrammen sind alle bekannten Abläufe wie etwa Programmteil- oder Datendekodierungen, externe Berechnungen, verschlüsselte Programmparameter, Statemachines usw. einzeln kombiniert und/oder variiert zu verstehen.

Erfindungsgemäß ist nun vorgesehen, daß der auslesegesicherte Programmspeicher 7 zusammen mit dem Aktivierungskodespeicher 2 in der Schutzvorrichtung 5 angeordnet ist.

Dadurch muß kein eigener Speicher in der zu schützenden Anlage 4 vorgesehen sein und sollte diese defekt sein, kann jederzeit ein Ersatzsystem mit derselben Schutzvorrichtung 5 weiterarbeiten, welche in dieses nur eingesteckt zu werden braucht, ohne daß Aktivierungskodes oder Freigabeprogramme geändert werden müssen.

Der Programmspeicher 7 wird im Ausführungsbeispiel gemäß Fig.1 von einem Mikroprozessor 1 verwaltet, welcher den Informationsaustausch zwischen der zu schützenden Anlage 4 und der Schutzvorrichtung 5 betreibt und weitere Operationen zum Zwecke der Freigabe oder Sperre von bestimmten Funktionen der Anlage 4 ausführt.

Wie aus dem in Fig.1 gezeigten schematischen Aufbau der beiden Speicher 7 und 2 zu ersehen ist, sind im auslesegesicherten Programmspeicher 7 eine Vielzahl von Freigabeprogrammen d, 1...n und im Aktivierungskodespeicher 2 die den Freigabeprogrammen zugeordneten Aktivierungskodes e, 1...n gespeichert, wobei die einzelnen Freigabeprogramme d, 1...n voneinander getrennt abrufbar sind.

Die in Fig.2 gezeigte Ausführungsform einer erfindungsgemäßen Schutzvorrichtung beinhaltet in der Schutzvorrichtung 5 einen Mikroprozessor mit einem auslesegesicherten Flash-PROM-Programmspeicher 7, in welchem die Programmteile a bis d und die Identifikationsnummer f gemäß Fig.1 gespeichert sind. Die Aktivierungskodes e werden im EEPROM 2 abgelegt. Die Kommunikation mit der zu schützenden Anlage erfolgt über die parallele Schnittstelle 3, könnte aber aufgrund der in den Prozessor 1 eingebauten Schnittstelle auch seriell erfolgen. Die Stromversorgung der Schutzvorrichtung 5 erfolgt aus der parallelen Schnittstelle.

Die zu schützende Telephonanlage 4 ist mit einem Wartungsmodem versehen, über welches sämtliche Freigabeprogramme per Modem aktiviert und deaktiviert werden können. Ebenso kann die Schutzvorrichtung vom Werk aus vorkonfiguriert geliefert werden. Die erfindungsgemäße Schutzvorrichtung 5 verfügt für mehrere geschützte Programme bzw. Programmteile der Telephonanlage 4 über die entsprechenden Freigabeprogramme, die verschiedener Art sind und unabhängig voneinander aktiviert bzw. verändert werden können.

Die Aktivierung, Deaktivierung und Modifizierung erfolgt über die Kommunikationsschnittstelle 3 der erfindungsgemäßen Schutzvorrichtung 5, wobei die zugehörigen, von deren Identifikationsnummer abhängigen Aktivierungskodes nur für genau ein Freigabeprogramm in genau dieser Schutzvorrichtung gelten. Daher ist eine ungeschützte Übertragung des Aktivierungskodes, etwa zum Wartungsmodem der Telephonanlage 4, zulässig. Die Kommunikation kann zur Erhöhung der Sicherheit aber auch verschlüsselt erfolgen.

Die Aktivierungskodes werden am besten mittels PC-Programmen errechnet und können bei vorhandenem Datenpfad, wie etwa Netzwerk, Modem o.ä. oder manuell über Terminal eingegeben werden. Die Identifikationsnummer und die Nummer des zu aktivierenden oder zu modifizierenden Freigabeprogramms 1...n (Fig.1) können von der Schutzvorrichtung 5 in einen Kode eingearbeitet werden, von dem aus die entsprechenden Aktivierungskodes errechnet werden können. Diese Aktivierungskodes können von der Schutzvorrichtung abgefragt werden.

In Fig.2 sind die inneren Abläufe bei einer von der zu schützenden Anlage 4 durchgeführten Abfrage zu entnehmen, mit der ein gesperrter Programmteil freigegeben werden soll.
1.) In einem ersten Schritt wird von der Anlage 4 aus mittels einer Kommunikationsroutine a eine Abfrage nach einem Programm oder Programmteil für eine geschützte Funktion an die Schutzvorrichtung 5 durchgeführt.
2.) In einem zweiten Schritt wird über eine Nachrichtenauswertroutine b dasjenige der im Programmspeicher 7 abgelegten Freigabeprogramme d (#1...#n) ermittelt, mit welchem die Abfrage beantwortbar ist.
3.) In einem dritten Schritt wird mit Hilfe einer Schreib/Lese-Routine c der zugehörige Aktivierungskode e (#1...#n) aus dem Speicher 2 ausgelesen und entschlüsselt, sowie das daraus gewonnene Ergebnis mit der Identifikationsnummer f der Schutzvorrichtung verglichen. Die Identifikationsnummer f ist im Programmspeicher 7 abgelegt.
4.) In einem vierten Schritt wird bei Übereinstimmung von Identifikationsnummer f und dem entschlüsselten Aktivierungskode e mittels dem ermittelten Freigabeprogramm d das gesperrte Programm oder Programmteil in der Anlage 4 freigegeben, oder es bleibt bei Nichtübereinstimmung von Identifikationsnummer f und dem entschlüsselten Aktivierungskode e das Programm oder Programmteil der Abfrage gesperrt.

Die Aktivierungskodes brauchen nicht verschlüsselt zu werden, da jeder Aktivierungskode nur auf der erfindungsgemäßen Schutzvorrichtung funktioniert, für die er generiert worden ist, es muß also der Aktivierungskode zur gewünschten geschützten Funktion und zur internen Identifikationsnummer der Schutzvorrichtung passen. Um ein erfolgreiches Ausprobieren der Aktivierungskodes zu verhindern, sollte der Kode mindestens 32 Bit = 9 Dezimalstellen haben.

Um das Ausprobieren weiter zu erschweren, empfiehlt es sich, alle Aktivierungskodes zu akzeptieren, die entsprechenden Freigabeprogramme aber bei ungültigen Aktivierungskodes leicht verfälscht auszuführen, sodaß das zu schützende Programm nicht richtig ausgeführt wird.

Eine dafür passende Variante des vierten Schritts kann darin bestehen, daß bei Nichtübereinstimmung von Identifikationsnummer und dem entschlüsselten Aktivierungskode das der Abfrage entsprechende Programm oder Programmteil mit nur eingeschränkter Funktionalität oder zeitlich begrenzt freigegeben wird.

Wäre nämlich nach Eingabe eines Aktivierungskodes an einer Antwort der Schutzvorrichtung sofort ersichtlich, ob der Kode stimmt, könnten mit entsprechend programmierten Rechnern sehr rasch alle möglichen Aktivierungskodes vollautomatisch ausgetestet werden. Für einen solchen Fall müßten sehr lange Aktivierungskodes mit jeweils 64 Bit oder mehr eingesetzt werden.

Weiters kann vorgesehen sein, daß im vierten Schritt bei Nichtübereinstimmung von Identifikationsnummer und dem entschlüsselten Aktivierungskode eine spezielle Signal-Freigaberoutine gestartet wird, die eine Signalisierung auslöst. Diese Signalisierung kann darin bestehen, daß ein mit falschem Aktivierungskode unternommener Versuch über ein vorhandenes Modem gemeldet wird, sodaß eine zentrale Stelle darüber unterrichtet wird. Weiters besteht die Möglichkeit, eine solche Eingabe mit Datum und Uhrzeit in einem Speicher abzulegen, aus dem diese Angaben später wieder ausgelesen werden können.

Die Aktivierungskodes können auch per Modem oder durch Tastatureingabe zur zu schützenden Anlage und von dort an die erfindungsgemäße Schutzvorrichtung geliefert werden.

Eine weitere Variante der Erfindung kann darin bestehen, daß im dritten Schritt der zugehörige Aktivierungskode aus dem Aktivierungskodespeicher gelesen und mit der Identifikationsnummer mathematisch verknüpft wird, wodurch ein funktioneller Teil des Freigabeprogramms, z.B eine Berechnungskonstante oder ein Programmkode, gebildet wird.

Dann entfällt der vierte Schritt vollkommen, da das Freigabeprogramm bei falschem Aktivierungskode automatisch falsche Ergebnisse liefert. Diese Variante kann daher sogar zu einer Umprogrammierung der Freigabeprogramme benutzt werden, längere Aktivierungskodes vorausgesetzt.

Um weitere Aktivierungskodes in die Schutzeinrichtung 5 einzutragen wird die folgende Vorgangsweise gewählt:
1.) Es wird eine Abfrage über die Nummer (1...n) des freizugebenden Freigabeprogramms an die Schutzvorrichtung durchgeführt.
2.) Die Auswerteroutine b erzeugt aus der Identifikationsnummer f und der Nummer des Freigabeprogramms einen Kode.
3) Der Kode wird per Modem, Fax, Telephon, Netzwerkanbindung o.ä. zum Lizenzgeber gesandt.
4.) Beim Lizenzgeber wird mittels Programm ein Antwortcode erzeugt.
5) Der Antwortcode wird wieder an die Schutzvorrichtung zurückgesandt, welche diesen als Aktivierungskode speichert.

Die Punkte 2 und 3 können entfallen, wenn dem Lizenzgeber die interne Identifikationsnummer der Schutzvorrichtung bekannt ist.

Um einen Aktivierungskode zu löschen, wird genauso vorgegangen wie beim Eintragen. Die Nachricht an die Schutzvorrichtung enthält aber zur Nummer des Aktivierungskodes einen falschen Kode, mit dem keine Freigabe einer Funktion erzielbar ist.

## Patentansprüche

1. Vorrichtung zum Schutz eines elektronischen Geräts, einer Anlage, eines Systems od. dgl. gegen die Benutzung von über sperrbare Programme oder Programmteile ausführbaren Funktionen, welche Vorrichtung mit dem zu schützenden Gerät, Anlage, System od. dgl. über eine Schnittstelle verbindbar ist, wobei der Schutzvorrichtung eine vorbestimmbare Identifikationsnummer zugeordnet ist und die Schutzvorrichtung einen vorzugsweise nichtlöschbaren Speicher, z.B. ein EEPROM, zur Speicherung zumindest eines Aktivierungskodes umfaßt, welcher Aktivierungskode mit der Identifikationsnummer vergleichbar ist, und ein auslesegesicherter Programmspeicher zur Speicherung zumindest eines Freigabeprogramms vorgesehen ist, welches Freigabeprogramm bei Übereinstimmung des Aktivierungskodes und der Identifikationsnummer der Schutzvorrichtung durchgeführt wird, **dadurch gekennzeichnet, daß** der auslesegesicherte Programmspeicher (7) zur Speicherung zumindest eines Freigabeprogramms zusammen mit dem Speicher zur Speicherung (2) zumindest eines Aktivierungskodes in der Schutzvorrichtung (5) angeordnet ist.

2. Schutzvorrichtung nach Anspruch 1, **dadurch gekennzeichnet, daß** im auslesegesicherten Programmspeicher (7) eine Vielzahl von Freigabeprogrammen und im Aktivierungskodespeicher den Freigabeprogrammen zugeordnete Aktivierungskodes gespeichert sind, welche Freigabeprogramme voneinander getrennt abrufbar sind.

3. Schutzvorrichtung nach Anspruch 1 oder 2, **dadurch gekennzeichnet, daß** der auslesegesicherte Programmspeicher (7) zusammen mit einem Mikroprozessor (1) in der Schutzvorrichtung angeordnet ist.

4. Schutzvorrichtung nach Anspruch 2 oder 3, **dadurch gekennzeichnet, daß** zumindest ein Teil der Freigabeprogramme über eine vom zu schützenden Gerät getrennten Eingabevorrichtung aktivierbar sind, mit der die Schutzvorrichtung verbindbar ist.

5. Schutzvorrichtung nach einem der Ansprüche 1 bis 4, **dadurch gekennzeichnet, daß** die Schutzvorrichtung über einen Steckkontakt mit dem zu schützenden Gerät, Anlage, System od. dgl. verbindbar ist.

6. Schutzvorrichtung nach einem der Ansprüche 1 bis 5, **dadurch gekennzeichnet, daß** die Stromversorgung der Schutzvorrichtung (5) aus der Schnittstelle erfolgt.

7. Verfahren zur Freigabe eines gesperrten Programms oder Programmteils unter Verwendung einer Vorrichtung nach einem der Ansprüche 1 bis 6, **dadurch gekennzeichnet, daß** in einem ersten Schritt von dem Gerät, der Anlage, dem System od. dgl. aus eine Abfrage nach einem Programm oder Programmteil für eine geschützte Funktion an die Schutzvorrichtung durchgeführt wird, daß in einem zweiten Schritt eine der im Programmspeicher abgelegten Freigabeprogramme ermittelt wird, mit welcher die Abfrage beantwortbar ist, daß in einem dritten Schritt der zugehörige Aktivierungskode aus dem Speicher ausgelesen und entschlüsselt, sowie das daraus gewonnene Ergebnis mit der Identifikationsnummer der Schutzvorrichtung verglichen wird, daß in einem vierten Schritt bei Übereinstimmung von Identifikationsnummer und dem entschlüsselten Aktivierungskode das ermittelte Freigabeprogramm das gesperrte Programm oder Programmteil im Gerät freigibt, oder bei Nichtübereinstimmung von Identifikationsnummer und dem entschlüsselten Aktivierungskode das Programm oder Programmteil der Abfrage gesperrt bleibt.

8. Verfahren nach Anspruch 7, **dadurch gekennzeichnet, daß** im vierten Schritt bei Nichtübereinstimmung von Identifikationsnummer und dem entschlüsselten Aktivierungskode das der Abfrage entsprechende Programm oder Programmteil mit nur eingeschränkter Funktionalität oder zeitlich begrenzt bleibt und ein anderes Programm freigegeben wird.

9. Verfahren nach Anspruch 7, **dadurch gekennzeichnet, daß** im vierten Schritt bei Nichtübereinstimmung von Identifikationsnummer und dem entschlüsselten Aktivierungskode ein Signal-Freigabeprogramm gestartet wird, welches eine Signalisierung auslöst.

10. Verfahren nach Anspruch 7 oder 8, **dadurch gekennzeichnet, daß** im dritten Schritt der zugehörige Aktivierungskode aus dem Aktivierungskodespeicher gelesen und mit der Identifikationsnummer mathematisch verknüpft wird, wodurch ein funktioneller Teil des Freigabeprogramms, z.B eine Berechnungskonstante oder ein Programmcode, gebildet wird.

## Claims

1. An apparatus for protecting an electronic device, an installation, a system or the like against the use of functions which can be executed via blockable programs or parts of programs, which apparatus can be connected with the device, installation, system or the like via an interface, with the protective apparatus being assigned a predeterminable identification number with the protective apparatus comprising a preferably non-erasable memory, e.g. an EEPROM, for storing at least one activation code, which activation code can be compared with the identification number, and a read-secured program memory for storing at least one release program is provided, which release program is executed upon correspondence of the activation code and the identification number of the protective apparatus, **characterized in that** the read-secured program memory (7) for storing at least one release program is configured together with the memory for storing (2) at least one activation code in the protective apparatus (5).

2. A protective apparatus as claimed in claim 1, **characterized in that** a plurality of release programs are stored in the read-secured program memory and activation codes assigned to the release programs are stored in the activation code memory, which release programs can be retrieved separately from one another.

3. A protective apparatus as claimed in claim 1 or 2, **characterized in that** the read-secured program memory (7) is arranged together with a microprocessor (1) in the protective apparatus.

4. A protective apparatus as claimed in claim 2 or 3, **characterized in that** at least a part of the release programs can be activated via an input device which is separate from the device to be protected and with which the protective apparatus can be connected.

5. A protective apparatus as claimed in one of the claims 1 to 4, **characterized in that** the protective apparatus can be connected via a plug-in contact with the device, installation, system or the like to be protected.

6. A protective apparatus as claimed in one of the claims 1 to 5, **characterized in that** the power supply of the protective apparatus (5) occurs from the interface.

7. A method for releasing a blocked program or part of a program by using an apparatus as claimed in one of the claims 1 to 6, **characterized in that** in a first step a query for a program or part of a program for the purpose of a protected function is made to the protective apparatus by the device, installation, system or the like, that in a second step one of the release programs stored in the program memory is determined with which the query can be answered, that in a third step the pertinent activation code is read out of the memory and is decoded and the result obtained therefrom is compared with the identification number of the protective apparatus, that in a fourth step, when the identification number and the decoded activation code correspond with each other, the determined release program releases the blocked program or part of the program in the device or, in the case of non-correspondence of identification number and decoded activation code, the program or part of the program of the query remains blocked.

8. A method as claimed in claim 7, **characterized in that** in the fourth step, when the identification number and the decoded activation code do not conform, the program or part of program which correspond to the query remains with an only limited functionality or limited in time and another program is released.

9. A method as claimed in claim 7, **characterized in that** in the fourth step, when the identification number and the decoded activation code do not conform, a signal release program is started which initiates signaling.

10. A method as claimed in claim 7 or 8, **characterized in that** in the third step the pertinent activation code is read from the activation code memory and is mathematically linked to the identification number, as a result of which a functional part of the release program, e.g. a calculation constant or a program code, will be formed.

## Revendications

1. Dispositif pour protéger un appareil électronique, une installation, un système ou similaire contre l'utilisation de fonctions exécutables à l'aide de programmes ou de parties de programmes pouvant être verrouillés, lequel dispositif peut être connecté à l'appareil, à l'installation, au système ou similaire à protéger par une interface, le dispositif de protection étant associé à un numéro d'identification pouvant être prédéterminé et le dispositif de protection comprenant une mémoire de préférence non effaçable, par exemple une EEPROM, pour mémoriser au moins un code d'activation, lequel code d'activation peut être comparé avec le numéro d'identification, et il est prévu une mémoire de programmes protégée en lecture pour la mémorisation d'au moins un programme de déverrouillage, lequel programme de déverrouillage est exécuté lorsque le code d'activation concorde avec le numéro d'identification du dispositif de protection, **caractérisé en ce que** la mémoire de programmes protégée en lecture (7) pour la mémorisation d'au moins un programme de déverrouillage est disposée avec la mémoire pour la mémorisation (2) d'au moins un code d'activation dans le dispositif de protection (5).

2. Dispositif de protection selon la revendication 1, **caractérisé en ce qu'**une pluralité de programmes de déverrouillage est mémorisée dans la mémoire de programmes protégée en lecture (7) et des codes d'activation associés aux programmes de déverrouillage sont mémorisés dans la mémoire de codes d'activation, les programmes de déverrouillage pouvant être appelés séparément les uns des autres.

3. Dispositif de protection selon la revendication 1 ou 2, **caractérisé en ce que** la mémoire de programmes protégée en lecture (7) est disposée dans le dispositif de protection avec un microprocesseur (1).

4. Dispositif de protection selon la revendication 2 ou 3, **caractérisé en ce qu'**une partie au moins des programmes de déverrouillage peut être activée par un dispositif de saisie séparé de l'appareil à protéger et avec lequel le dispositif de protection peut être connecté.

5. Dispositif de protection selon l'une quelconque des revendications 1 à 4, **caractérisé en ce que** le dispositif de protection peut être connecté à l'appareil, à l'installation, au système ou similaire à protéger par un contact à fiche.

6. Dispositif de protection selon l'une quelconque des revendications 1 à 5, **caractérisé en ce que** l'alimentation électrique du dispositif de protection (5) passe par l'interface.

7. Procédé pour le déverrouillage d'un programme ou d'une partie de programme verrouillés en utilisant un dispositif selon l'une quelconque des revendications 1 à 6, **caractérisé en ce que** dans une première étape, l'appareil, l'installation, le système ou similaire demande au dispositif de protection un programme ou une partie de programme pour une fonction protégée, **en ce que** dans une deuxième étape, l'un des programmes de déverrouillage stockés dans la mémoire de programmes est identifié pour répondre à la demande, **en ce que** dans une troisième étape, le code d'activation correspondant est lu dans la mémoire et décodé et le résultat ainsi obtenu est comparé au numéro d'identification du dispositif de protection, **en ce que** dans une quatrième étape, si le numéro d'identification coïncide avec le code d'activation décodé, le programme de déverrouillage identifié déverrouille le programme ou la partie de programme verrouillés dans l'appareil ou, si le numéro d'identification ne coïncide pas avec le code d'activation décodé, le programme ou la partie de programme concerné par la demande reste bloqué.

8. Procédé selon la revendication 7, **caractérisé en ce que** dans la quatrième étape, si le numéro d'identification ne coïncide pas avec le code d'activation décodé, le programme ou la partie de programme correspondant à la demande est limité dans ses fonctionnalités ou dans le temps et un autre programme est débloqué.

9. Procédé selon la revendication 7, **caractérisé en ce que** dans la quatrième étape, si le numéro d'identification ne coïncide pas avec le code d'activation décodé, un programme de déblocage de signal est lancé pour déclencher une signalisation.

10. Procédé selon la revendication 7 ou 8, **caractérisé en ce que** dans la troisième étape, le code d'activation correspondant est lu dans la mémoire de codes d'activation et lié mathématiquement au numéro d'identification, de manière à former une partie fonctionnelle du programme de déverrouillage, par exemple une constante de calcul ou un code de programme.
